# EUROPEAN PATENT APPLICATION

(11) **EP 4 559 816 A1**
(43) Date of publication of application: **28.05.2025**
(21) Application number: 23841876.8
(22) Date of filing: 16.05.2023
(51) Int. Cl.: B64F 1/00

(54) **UNMANNED AERIAL VEHICLE RACK, HANGAR AND VEHICLE**

(30) Priority: 19.07.2022 CN 202210852107
(71) Applicant: BYD Company Limited, Shenzhen, Guangdong 518118 (CN)
(72) Inventor: LI, Dongping, Shenzhen, Guangdong 518118 (CN); CHEN, Jicheng, Shenzhen, Guangdong 518118 (CN); QIE, Xing, Shenzhen, Guangdong 518118 (CN); ZHAO, Chenyu, Shenzhen, Guangdong 518118 (CN); WANG, Yigang, Shenzhen, Guangdong 518118 (CN)
(74) Representative: Mathys & Squire
(86) International application number: PCT/CN2023/094505
(87) International publication number: WO 2024/016807

(57) **Abstract**

An unmanned aerial vehicle rack, a hangar and a vehicle. The unmanned aerial vehicle rack comprises: a mounting body and an electrical connection line. The mounting body is used for mounting an unmanned aerial vehicle, and the mounting body is adapted to be parked on a parking platform. A first end of the electrical connection line is provided with a first matching portion, the first matching portion being adapted to be electrically connected to a charging end; a second end of the electrical connection line is connected to a second matching portion at the bottom of the mounting body, the second matching portion being adapted to be electrically connected to a power supply end of the parking platform.

## Description

### CROSS-REFERENCE TO RELATED APPLICATIONS

The present disclosure claims priority to and benefits of Chinese Patent Application No. 2022108521073, filed on July 19, 2022. The entire content of the above-referenced application is incorporated herein by reference.

### FIELD

The present disclosure relates to the field of unmanned aerial vehicle technologies, and in particular, to an unmanned aerial vehicle rack, a hangar, and a vehicle.

### BACKGROUND

It is pointed out in the related art that an unmanned aerial vehicle in a parked state needs to be parked in a hangar. The hangar, serving as a platform for the unmanned aerial vehicle to take off and land, may be disposed on a vehicle, a ship, or a building wall.

However, due to a limited mile range of the unmanned aerial vehicle, after the unmanned aerial vehicle completes a flight task and returns to the hangar, manual intervention is required to connect an external power supply to the unmanned aerial vehicle for charging. The manual charging operation is complex which affects user experience.

### SUMMARY

The present disclosure is intended to resolve at least one of technical problems existing in a related art. Therefore, the present disclosure proposes an unmanned aerial vehicle rack. The unmanned aerial vehicle rack can implement automatic charging of an unmanned aerial vehicle on a parking platform.

The present disclosure further proposes a hangar including the unmanned aerial vehicle rack.

The present disclosure further proposes a vehicle including the hangar.

According to a first aspect of the present disclosure, an unmanned aerial vehicle rack is provided, applied to an unmanned aerial vehicle including a charging end. The unmanned aerial vehicle rack includes a mounting body, where the mounting body is configured to mount the unmanned aerial vehicle, and the mounting body is configured to be parked on a parking platform; and an electrical connection cable, where a first fitting portion is arranged at a first end of the electrical connection cable, the first fitting portion is configured to electrically connect to the charging end, a second end of the electrical connection cable is connected to a second fitting portion at a bottom of the mounting body, and the second fitting portion is configured to electrically connect to a power supply end of the parking platform.

The unmanned aerial vehicle rack in this embodiment of the present disclosure may be mounted on the unmanned aerial vehicle. The unmanned aerial vehicle rack includes the mounting body and the electrical connection cable. When the unmanned aerial vehicle is parked on the parking platform by using the mounting body, the electrical connection cable may connect the power supply end of the parking platform to the charging end of the unmanned aerial vehicle, so that the unmanned aerial vehicle is automatically charged on the parking platform, thereby helping reduce a manual operation of charging the unmanned aerial vehicle and improving user experience.

In some embodiments, a cabling channel is provided on the mounting body. The cabling channel extends to the bottom of the mounting body, and the electrical connection cable is mounted in the cabling channel.

In some embodiments, the second fitting portion includes a contact convex point. A contact groove is provided at the power supply end. The contact convex point is configured to extend into the contact groove to electrically connect the second fitting portion to the power supply end.

Further, a mounting channel is provided on the second fitting portion. An elastic member is arranged in the mounting channel. The elastic member fits the contact convex point to apply a force toward the contact convex point, and the force causes the contact convex point to exhibit a tendency to extend out of the mounting channel.

Further, a plurality of contact convex points are provided, and a plurality of avoidance through holes are provided on the mounting body. The plurality of contact convex points are in one-to-one correspondence with the plurality of avoidance through holes, and each of the plurality of contact convex points can extend out of the corresponding avoidance through hole to contact with the power supply end.

In some embodiments, the mounting body includes: a support portion, where the support portion is configured to be supported by the parking platform; and a mounting portion, where the mounting portion is arranged at a top of the support portion, a placement space is defined by the mounting portion and the support portion, and a front portion and a rear portion of the placement space are open for mounting the unmanned aerial vehicle.

Further, the top of the support portion is formed as a support surface that fits the unmanned aerial vehicle, and a first hollowed portion is provided on the support surface.

Further, a second hollowed portion is provided on the mounting portion.

Further, a mounting assembly configured to mount an external device is arranged on a top of the mounting portion.

Further, the mounting assembly includes: a threaded hole, where the threaded hole is provided at the top of the mounting portion; a connection adapter, where the connection adapter fits a screw thread of the threaded hole, and a fixing hole is provided at an end part of the connection adapter projecting out of the mounting portion; and a fastener, where the fastener is configured to fit the external device and the fixing hole.

According to an embodiment of a second aspect of the present disclosure, a hangar is provided, including a parking platform and the unmanned aerial vehicle rack in the foregoing embodiment. A power supply end is arranged on the parking platform. When a mounting body is parked on the parking platform, a second fitting portion is configured to electrically connect to the power supply end.

In the hangar in this embodiment of the present disclosure, the parking platform is configured to allow parking of an unmanned aerial vehicle. The unmanned aerial vehicle rack may be mounted on the unmanned aerial vehicle. The unmanned aerial vehicle rack includes the mounting body and the electrical connection cable. When the unmanned aerial vehicle is parked on the parking platform by using the mounting body, the electrical connection cable may connect the power supply end of the parking platform to the charging end of the unmanned aerial vehicle, so that the unmanned aerial vehicle is automatically charged on the parking platform, thereby helping reduce a manual operation of charging the unmanned aerial vehicle and improving user experience.

In some embodiments, the hangar further includes a charging controller electrically connected to the power supply end, and the charging controller is configured to control an electrical output of the power supply end.

In some embodiments, the hangar further includes a current detection loop. The current detection loop includes two contacts arranged spaced apart at the power supply end. When the second fitting portion makes contact with the two contacts, the current detection loop is closed to determine that the unmanned aerial vehicle rack is parked on the parking platform.

In some embodiments, the hangar further includes a centering mechanism. The centering mechanism is configured to adjust a position of the mounting body on the parking platform, to cause the mounting body to be in a centered state in which the second fitting portion is electrically connected to the power supply end.

According to an embodiment of a third aspect of the present disclosure, a vehicle is provided, including a vehicle body and the hangar in the foregoing embodiment. The hangar is arranged at a top of the vehicle body.

In the vehicle in this embodiment of the present disclosure, the hangar is arranged at the top of the vehicle body of the vehicle. The parking platform of the hangar is configured to allow parking of an unmanned aerial vehicle. The unmanned aerial vehicle rack may be mounted on the unmanned aerial vehicle. The unmanned aerial vehicle rack includes the mounting body and the electrical connection cable. When the unmanned aerial vehicle is parked on the parking platform by using the mounting body, the electrical connection cable may connect the power supply end of the parking platform to the charging end of the unmanned aerial vehicle, so that the unmanned aerial vehicle is automatically charged on the parking platform, thereby helping reduce a manual operation of charging the unmanned aerial vehicle and improving user experience.

Additional aspects and advantages of the present disclosure are partially given in the following descriptions, some of which will become apparent from the following descriptions or may be learned from practices of the present disclosure.

### BRIEF DESCRIPTION OF THE DRAWINGS

FIG. 1 is a schematic diagram of an unmanned aerial vehicle rack, an unmanned aerial vehicle, and an external device according to an embodiment of the present disclosure;
FIG. 2 is a schematic diagram of an unmanned aerial vehicle rack and an external device according to an embodiment of the present disclosure;
FIG. 3 is an exploded view of FIG. 2;
FIG. 4 is a cross-sectional view of FIG. 2;
FIG. 5 is a schematic diagram of a power supply end and a second fitting portion according to an embodiment of the present disclosure;
FIG. 6 is a schematic diagram of an unmanned aerial vehicle rack, an unmanned aerial vehicle, and a centering mechanism according to an embodiment of the present disclosure; and
FIG. 7 is a schematic diagram of a hangar according to an embodiment of the present disclosure.

In the drawings:
a hangar 1000, a centering mechanism 100, a driving motor 10, a power gear 11, a rotating rod 21, a fitting gear 211, a movable member 30, a push rod 40, a parking platform 80, a power supply end 801, a contact groove 8011, an unmanned aerial vehicle rack 9, a mounting body 91, a support portion 911, a first hollowed portion 9111, a mounting portion 912, a second hollowed portion 9122, an electrical connection cable 92, a first fitting portion 921, a contact convex point 9211, a second fitting portion 922, a fastening mounting member 93, a mounting assembly 94, a pre-embedded nut 941, a connection adapter 942, a fastener 943, an unmanned aerial vehicle 200, a battery 201, a battery swapping mechanism 300, a battery swapping driving component 301, a battery swapping mechanical claw 302, and an external device 400.

### DETAILED DESCRIPTION

The following describes embodiments of the present disclosure in detail. Examples of the embodiments are shown in the accompanying drawings. Same or similar reference numerals throughout represent same or similar elements or elements with same or similar functions. The following embodiments described with reference to the accompanying drawings are examples, are intended to explain the present disclosure, and cannot be understood as a limitation on the present disclosure.

The following disclosure provides many different embodiments or examples to implement different structures of the present disclosure. To simplify disclosure of the present disclosure, components and settings in specific examples are described below. Certainly, the components and settings are merely examples, and are not intended to limit the present disclosure. In addition, in the present disclosure, reference numerals and/or letters may be repeated in different examples. This repetition is for an objective of simplicity and clarity, and does not indicate a relationship between various embodiments and/or settings discussed. In addition, examples of various specific processes and materials are provided in the present disclosure, but a person of ordinary skill in the art may be aware of applicability of another process and/or use of another material.

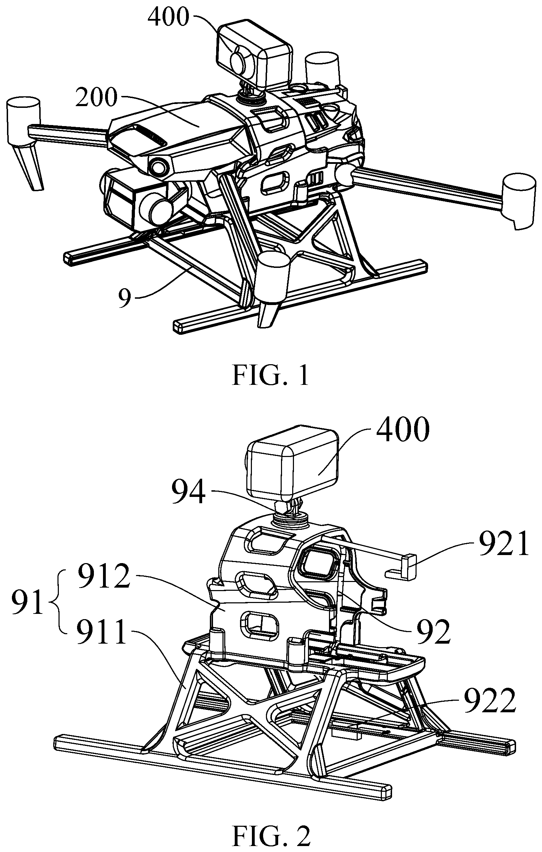

An unmanned aerial vehicle rack 9, a hangar 1000, and a vehicle in the embodiments of the present disclosure are described in detail below with reference to FIG. 1 to FIG. 7.

Referring to FIG. 1 to FIG. 4, a charging end is arranged on an unmanned aerial vehicle 200. An external power supply may be connected to the charging end to charge the unmanned aerial vehicle 200. The charging end may be disposed at a position such as a tail, a bottom, or a top of the unmanned aerial vehicle 200.

The unmanned aerial vehicle rack 9 includes a mounting body 91 and an electrical connection cable 92. The mounting body 91 is configured to mount the unmanned aerial vehicle 200, and the mounting body 91 is configured to be parked on a parking platform 80. In other words, the mounting body 91 may be fixed to the unmanned aerial vehicle 200, and at least a part of the mounting body 91 is located below the unmanned aerial vehicle 200. The mounting body 91 can increase a height of the unmanned aerial vehicle 200, to avoid interference between a body of the unmanned aerial vehicle 200 and a surrounding component when the unmanned aerial vehicle 200 lands. The mounting body 91 can further increase a contact area between the unmanned aerial vehicle 200 and the parking platform 80, to reduce operation difficulty when the unmanned aerial vehicle 200 lands on the parking platform 80.

A first fitting portion 921 is arranged at a first end of the electrical connection cable 92. The first fitting portion 921 is configured to electrically connect to the charging end, and the first fitting portion 921 may maintain a plug-in and fixed electrical connection state with the charging end. A second end of the electrical connection cable 92 is connected to a second fitting portion 922 at a bottom of the mounting body 91. The second fitting portion 922 is configured to electrically connect to a power supply end 801 of the parking platform 80. When the unmanned aerial vehicle 200 is parked on the parking platform 80, the second fitting portion 922 may contact with the power supply end 801 of the parking platform 80 to implement an electrical connection. Therefore, a charging current may be output through the power supply end 801 and conducted to the charging end through the electrical connection cable 92, so that the unmanned aerial vehicle 200 is automatically charged on the parking platform 80.

It should be noted that the power supply end 801, the charging end, and the electrical connection cable 92 may not only transmit current for charging the unmanned aerial vehicle 200, but also transmit data, so that internal data of the unmanned aerial vehicle 200 is exported when the unmanned aerial vehicle 200 is charged. Optionally, the charging end is a Type-C female connector, and the first fitting portion 921 is a Type-C male connector.

In some embodiments of the present disclosure, the unmanned aerial vehicle rack 9 may be designed to match different models of unmanned aerial vehicles 200, so that the unmanned aerial vehicle rack 9 closely fits the corresponding unmanned aerial vehicle 200. A cabling channel guides the first fitting portion 921 of the electrical connection cable 92 to the charging end of the corresponding unmanned aerial vehicle 200, and ensures that the first fitting portion 921 of the electrical connection cable 92 matches an interface of the charging end of the unmanned aerial vehicle 200, so that the unmanned aerial vehicle rack 9 can match a charging interface of any model of unmanned aerial vehicle 200 in a market.

The unmanned aerial vehicle rack 9 in this embodiment of the present disclosure may be mounted on the unmanned aerial vehicle 200. The unmanned aerial vehicle rack 9 includes the mounting body 91 and the electrical connection cable 92. When the unmanned aerial vehicle 200 is parked on the parking platform 80 by using the mounting body 91, the electrical connection cable 92 may connect the power supply end 801 of the parking platform 80 to the charging end of the unmanned aerial vehicle 200, so that the unmanned aerial vehicle 200 is automatically charged on the parking platform 80, thereby helping reduce a manual operation of charging the unmanned aerial vehicle 200 and improving user experience.

Referring to FIG. 1 to FIG. 4, in some embodiments of the present disclosure, the cabling channel is provided on the mounting body 91. The cabling channel extends to the bottom of the mounting body 91, and the electrical connection cable 92 is mounted in the cabling channel. The cabling channel may be configured to fix the electrical connection cable 92 and control a route of the electrical connection cable 92, to prevent the electrical connection cable 92 from loosening and shaking. The cabling channel may be provided on an inner side of the mounting body 91, to reduce external leakage of the electrical connection cable 92 and hide the electrical connection cable 92, thereby helping reduce impact of the electrical connection cable 92 on performance and beauty of the unmanned aerial vehicle 200, and improve a service life of the electrical connection cable 92. A slot for interference fit with the electrical connection cable 92 may be provided in the cabling channel.

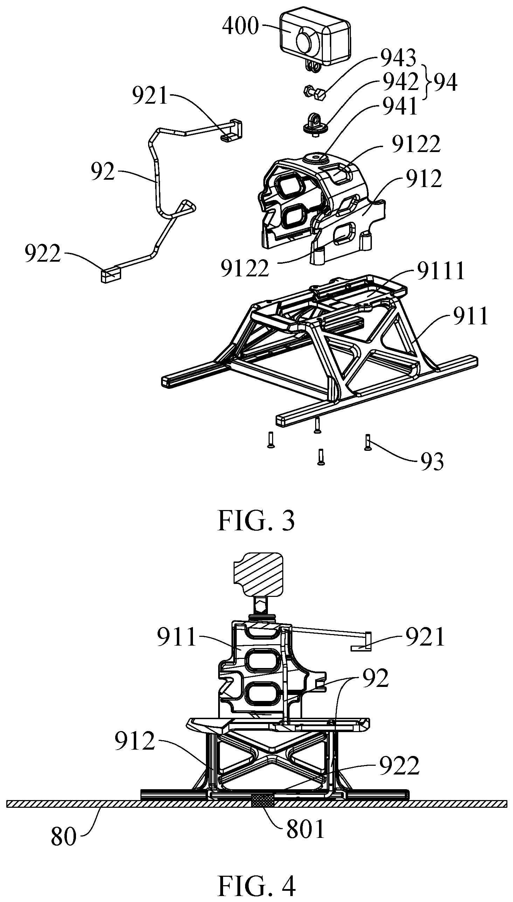

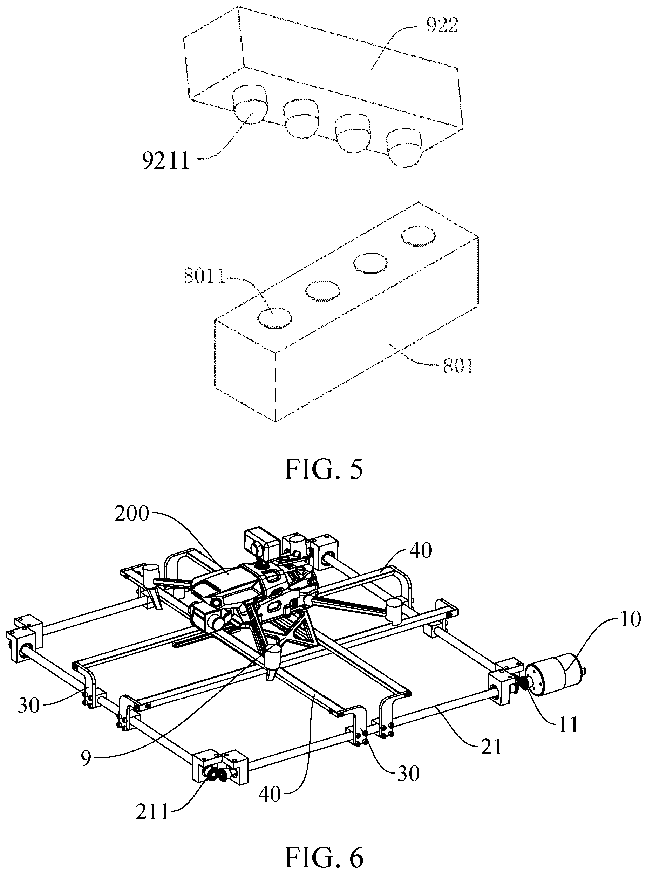

Referring to FIG. 4 and FIG. 5, in some embodiments of the present disclosure, the second fitting portion 922 includes a contact convex point 9211, and a contact groove 8011 is provided at the power supply end 801. The contact convex point 9211 is configured to extend into the contact groove 8011 to electrically connect the second fitting portion 922 to the power supply end 801. Fitting between the contact convex point 9211 and the contact groove 8011 can implement multi-direction multi-angle charging, and further facilitates establishment and separation of an electrical connection between the second fitting portion 922 and the power supply end 801, to prevent the establishment and separation of the electrical connection between the second fitting portion 922 and the power supply end 801 from affecting takeoff and landing operations of the unmanned aerial vehicle 200.

In some other embodiments of the present disclosure, the second fitting portion 922 includes a wireless charging receiver, and a wireless charging transmitter is arranged at the power supply end 801. When the unmanned aerial vehicle 200 is parked on the parking platform 80, the wireless charging receiver may directly face the wireless charging transmitter, so that the second fitting portion 922 is electrically connected to the power supply end 801, thereby charging the unmanned aerial vehicle 200.

In some embodiments of the present disclosure, a mounting channel is provided on the second fitting portion 922, and an elastic member is arranged in the mounting channel. The elastic member fits the contact convex point 9211 to apply a force toward the contact convex point 9211, and the force causes the contact convex point 9211 to exhibit a tendency to extend out of the mounting channel. The mounting channel may be provided in a gravity direction, and the contact convex point 9211 may extend out of the mounting channel from a lower end of the mounting channel under the force of the elastic member. After the unmanned aerial vehicle 200 lands, when the second fitting portion 922 is not aligned with and does not fit the contact groove 8011, the contact convex point 9211 may press the elastic member under gravity influence of the unmanned aerial vehicle 200 and the unmanned aerial vehicle rack 9, and the contact convex point 9211 retracts in the mounting channel, so that the unmanned aerial vehicle 200 is stably parked. When the second fitting portion 922 is aligned with and fits the contact groove 8011, the contact convex point 9211 may extend out of the mounting channel under the force of the elastic member, and extend into the contact groove 8011 to abut against a groove bottom of the contact groove 8011, to help improve reliability of an electrical connection between the contact convex point 9211 and the contact groove 8011 and avoid a false connection problem. Optionally, the elastic member and the contact convex point 9211 are constructed into a spring pin, so that the contact convex point 9211 can extend out of and retract in the mounting channel.

In some embodiments of the present disclosure, a plurality of contact convex points 9211 are provided, and contact grooves 8011 in one-to-one correspondence with the plurality of contact convex points 9211 are provided at the power supply end 801, to form a charging circuit after each of the plurality of contact convex points 9211 extends into the corresponding contact groove 8011, and enhance a bearing capacity of the charging circuit, thereby helping improve a charging speed of the unmanned aerial vehicle 200. A plurality of avoidance through holes are provided on the mounting body 91. The plurality of contact convex points 9211 are in one-to-one correspondence with the plurality of avoidance through holes. Each of the plurality of contact convex points 9211 can extend out of the corresponding avoidance through hole to contact with the power supply end 801. In other words, after the unmanned aerial vehicle 200 lands, when the second fitting portion 922 is not aligned with and does not fit the contact groove 8011, the contact convex point 9211 may be pressed back to the avoidance through hole. In this case, the avoidance through hole may protect the contact convex point 9211 and reduce pressure on the contact convex point 9211. When the second fitting portion 922 is aligned with and fits the contact groove 8011, the contact convex point 9211 may extend out of the corresponding avoidance through hole under the force of the elastic member and extend into the contact groove 8011 to abut against the groove bottom of the contact groove 8011, to help improve the reliability of the electrical connection between the contact convex point 9211 and the contact groove 8011 and avoid the false connection problem. Optionally, a maximum length by which each of the plurality of contact convex points 9211 extends out of the avoidance through hole is from 2 mm to 3 mm.

Referring to FIG. 1 to FIG. 4, in some embodiments of the present disclosure, the mounting body 91 includes a support portion 911 and a mounting portion 912. The support portion 911 is configured to be supported by the parking platform 80, and at least a part of the support portion 911 may be located below the unmanned aerial vehicle 200. The support portion 911 can increase a distance between the body of the unmanned aerial vehicle 200 and the parking platform 80, to avoid interference between the body of the unmanned aerial vehicle 200 and a surrounding component when the unmanned aerial vehicle 200 lands. In addition, the support portion 911 can further increase the contact area between the unmanned aerial vehicle 200 and the parking platform 80, to reduce the operation difficulty when the unmanned aerial vehicle 200 lands on the parking platform 80. In addition, when the unmanned aerial vehicle 200 lands, the support portion 911 can further implement cushioning and shock absorption, to reduce an impact force suffered by the unmanned aerial vehicle 200 during landing, thereby helping improve safety of the unmanned aerial vehicle 200. When the unmanned aerial vehicle 200 abnormally falls off the ground due to high-frequency electromagnetic interference or the like, the unmanned aerial vehicle 200 is prevented from being damaged.

The mounting portion 912 is arranged at a top of the support portion 911, a placement space is defined by the mounting portion 912 and the support portion 911, and a front portion and a rear portion of the placement space are open for mounting the unmanned aerial vehicle 200. A middle of the body of the unmanned aerial vehicle 200 may penetrate through the placement space, and the mounting portion 912 and the support portion 911 may surround and cover the body of the unmanned aerial vehicle 200, to ensure stability of fixing between the unmanned aerial vehicle 200 and the mounting body 91.

Referring to FIG. 3, in some embodiments of the present disclosure, the top of the support portion 911 is formed as a support surface that fits the unmanned aerial vehicle 200, and a first hollowed portion 9111 is provided on the support surface. The support surface may support a bottom of the unmanned aerial vehicle 200. The first hollowed portion 9111 may run through the support surface in the gravity direction, so that the support surface forms a hollowed structure. The first hollowed portion 9111 can reduce a weight of the support portion 911, to implement a light-weight design of the support portion 911, thereby helping reduce a flight load weight of the unmanned aerial vehicle 200 and improve a mile range of the unmanned aerial vehicle 200. In addition, the first hollowed portion 9111 may correspond to a heat-dissipation air vent at the bottom of the unmanned aerial vehicle 200, to ensure that heat dissipation of the heat-dissipation air vent at the bottom of the unmanned aerial vehicle 200 is unimpeded. The first hollowed portion 9111 may further correspond to a device interface at the bottom of the unmanned aerial vehicle 200, to avoid the device interface at the bottom of the unmanned aerial vehicle 200.

Referring to FIG. 3, in some embodiments of the present disclosure, a second hollowed portion 9122 is provided on the mounting portion 912. The second hollowed portion 9122 may run through the mounting portion 912 in a thickness direction of the mounting portion 912, so that the mounting portion 912 forms a hollowed structure. The second hollowed portion 9122 can reduce a weight of the mounting portion 912, to implement a light-weight design of the mounting portion 912, thereby helping reduce the flight load weight of the unmanned aerial vehicle 200 and improve the mile range of the unmanned aerial vehicle 200.

In some embodiments of the present disclosure, the second hollowed portion 9122 may correspond to the heat-dissipation air vent of the unmanned aerial vehicle 200, to ensure that the heat dissipation of the heat-dissipation air vent of the unmanned aerial vehicle 200 is unimpeded. Optionally, in a case that structural strength of the mounting portion 912 is ensured, a plurality of second hollowed portions 9122 are provided on the mounting portion 912, to further reduce the weight of the mounting portion 912.

Referring to FIG. 3, in some embodiments of the present disclosure, both the mounting portion 912 and the support portion 911 may be integrally formed, to facilitate production of the mounting portion 912 and the support portion 911. In addition, the mounting portion 912 and the support portion 911 are detachably connected by a plurality of fastening mounting members 93, buckles, or the like, to help fix the unmanned aerial vehicle 200 between the mounting portion 912 and the support portion 911, thereby helping simplify an assembly process of the unmanned aerial vehicle rack 9 and the unmanned aerial vehicle 200, and reducing an assembly deviation to ensure production consistency.

Referring to FIG. 1 and FIG. 3, in some embodiments of the present disclosure, the mounting portion 912 may be mounted in place above the unmanned aerial vehicle 200, the support surface of the support portion 911 is buckled at a limiting point at a front end of the unmanned aerial vehicle 200, so that the support portion 911 is attached to a lower bottom surface of the unmanned aerial vehicle 200. The fastening mounting member 93 is pre-tightened, so that the mounting portion 912 is connected to the support portion 911, and a pre-tightening gap is reserved at a connection position. After fastening, the mounting portion 912 and the support surface of the support portion 911 are attached to a housing surface of the unmanned aerial vehicle 200. A plurality of boss limiting blocks configured to limit and fit the mounting portion 912 and/or the support portion 911 may be provided on the housing surface of the unmanned aerial vehicle 200, to ensure that the unmanned aerial vehicle 200 tightly fits the unmanned aerial vehicle rack 9 in any direction without a risk of slipping off.

Referring to FIG. 3, in some embodiments of the present disclosure, the fastening mounting member 93 may be a bolt. A nut configured to fit the bolt is pre-embedded at a bottom of the mounting portion 912, and the bolt may penetrate through the support portion 911 and then be fixed to the nut, so that both the mounting portion 912 and the support portion 911 are attached to the housing surface of the unmanned aerial vehicle 200, thereby ensuring that the unmanned aerial vehicle rack 9 tightly fits the unmanned aerial vehicle 200, and preventing the unmanned aerial vehicle 200 from slipping off the placement space. Optionally, the bolt is a countersunk bolt, and the nut is a M3 * 10 embedded round nut of the GB809-A standard. The mounting portion 912 and the support portion 911 may be connected by four countersunk bolts.

In some embodiments of the present disclosure, the mounting portion 912 is in a profiled structural design of a shell of the unmanned aerial vehicle 200. The mounting portion 912 may be closely attached to an outer surface of the unmanned aerial vehicle 200, and the mounting portion 912 may be clamped with a protruding part of the shell of the unmanned aerial vehicle 200, so that the mounting portion 912 is stably fixed to the unmanned aerial vehicle 200.

Referring to FIG. 2 and FIG. 3, in some embodiments of the present disclosure, a mounting assembly 94 configured to mount an external device 400 is arranged on a top of the mounting portion 912, so that the external device 400 can be fixed to the mounting assembly 94 of the unmanned aerial vehicle rack 9, to expand a function of the unmanned aerial vehicle 200. Therefore, the unmanned aerial vehicle 200 can satisfy execution conditions of complex tasks such as rescue searching and film shooting by using the external device 400, thereby satisfying an individual requirement of a user. Optionally, the external device 400 may be a motion camera, fill light, or the like.

Referring to FIG. 2 and FIG. 3, in some embodiments of the present disclosure, the mounting assembly 94 includes a threaded hole 941, a connection adapter 942, and a fastener 943. The threaded hole 941 is provided at the top of the mounting portion 912. The threaded hole 941 may be formed in the pre-embedded nut. The pre-embedded nut is pre-embedded at the top of the mounting portion 912. The connection adapter 942 fits a screw thread of the threaded hole 941, and a fixing hole is provided at an end part of the connection adapter 942 projecting out of the mounting portion 912. The fastener 943 is configured to fit the external device 400 and the fixing hole. Therefore, through dismounting and mounting of the external device 400 and the fastener 943, a user can flexibly replace the external device 400 as required, to help improve practicability of the unmanned aerial vehicle 200. In addition, when the external device 400 needs to be fixed to the mounting portion 912 by using another conversion apparatus, a connection adapter 942 and a fastener 943 that correspondingly match may be replaced with, and the threaded hole 941 may be connected to a plurality of commercially available conversion apparatuses.

Referring to FIG. 1 to FIG. 7, according to an embodiment of a second aspect of the present disclosure, a hangar 1000 is provided, including a parking platform 80 and the unmanned aerial vehicle rack 9 in the foregoing embodiment. A power supply end 801 is arranged on the parking platform 80. When a mounting body 91 is parked on the parking platform 80, a second fitting portion 922 is configured to electrically connect to the power supply end 801.

In the hangar 1000 in this embodiment of the present disclosure, the parking platform 80 is configured to allow parking of an unmanned aerial vehicle 200. The unmanned aerial vehicle rack 9 may be mounted on the unmanned aerial vehicle 200. The unmanned aerial vehicle rack 9 includes the mounting body 91 and the electrical connection cable 92. When the unmanned aerial vehicle 200 is parked on the parking platform 80 by using the mounting body 91, the electrical connection cable 92 may connect the power supply end 801 of the parking platform 80 to the charging end of the unmanned aerial vehicle 200, so that the unmanned aerial vehicle 200 is automatically charged on the parking platform 80, thereby helping reduce a manual operation of charging the unmanned aerial vehicle 200 and improving user experience.

In some embodiments of the present disclosure, the hangar 1000 further includes a charging controller electrically connected to the power supply end 801, and the charging controller is configured to control an electrical output of the power supply end 801. The charging controller may detect a current amount of the power supply end 801 to determine whether to stop output of a power supply. The current amount of the power supply end 801 may be used to determine whether the unmanned aerial vehicle 200 is fully charged. The charging controller may be powered off in time after the unmanned aerial vehicle 200 is fully charged, to avoid overcharging of the unmanned aerial vehicle 200. Specifically, after the power supply end 801 of the parking platform 80 is connected to the charging end of the unmanned aerial vehicle 200, the charging controller may monitor a charging current of the unmanned aerial vehicle 200 and a battery voltage of the unmanned aerial vehicle 200. The current of the power supply end 801 during charging of the unmanned aerial vehicle 200 is approximately 4A, and the current drops to within 0.1 A after the unmanned aerial vehicle 200 is fully charged. In this case, the unmanned aerial vehicle 200 is fully charged, and the controller stops the output of the power supply charging the unmanned aerial vehicle 200, to prevent damage to a battery of the unmanned aerial vehicle 200 caused by overcharging.

In some embodiments of the present disclosure, the hangar 1000 further includes a current detection loop. The current detection loop includes two contacts arranged spaced apart at the power supply end 801. When the second fitting portion 922 makes contact with the two contacts, the current detection loop is closed to determine that the unmanned aerial vehicle rack 9 is parked on the parking platform 80. In other words, when the two contact convex points 9211 on the second fitting portion 922 respectively contact with the two corresponding contacts, the power supply end 801 of the parking platform 80 is connected with the charging end of the unmanned aerial vehicle 200. When the current detection loop is in a closed state allowing current to flow, it is determined that the unmanned aerial vehicle rack 9 is parked on the parking platform 80, and the unmanned aerial vehicle 200 can be charged. When the two contact convex points 9211 do not contact with the two contacts, the power supply end 801 of the parking platform 80 is not connected with the charging end of the unmanned aerial vehicle 200, there is no current in the current detection loop, and the current detection loop is in a non-closed state. In this case, it may be determined that the second fitting portion 922 of the unmanned aerial vehicle rack 9 is not electrically connected to the power supply end 801, and the unmanned aerial vehicle 200 is not in a charging state.

It should be noted that the two contacts of the current detection loop may be contacts separately provided on the power supply end 801, or the two contact grooves 8011 on the power supply end 801 may be used as the contacts.

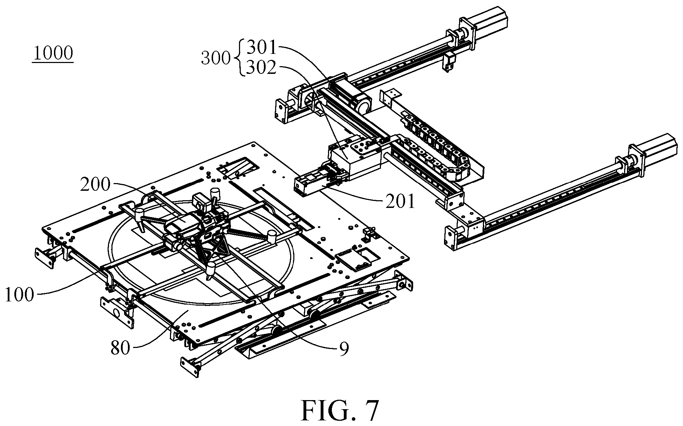

Referring to FIG. 6 and FIG. 7, in some embodiments of the present disclosure, the hangar 1000 further includes a centering mechanism 100. The centering mechanism 100 is configured to adjust a position of the mounting body 91 on the parking platform 80, to cause the mounting body 91 to be in a centered state in which the second fitting portion 922 is electrically connected to the power supply end 801, thereby implementing automatic centering and charging of the unmanned aerial vehicle 200.

Referring to FIG. 6 and FIG. 7, the centering mechanism 100 includes a driving motor 10, a rotating frame, a movable member 30, and a push rod 40. The driving motor 10 is in a power connection to the rotating frame. The rotating frame is configured to drive the movable member 30 to move. The movable member 30 drives the push rod 40 to move. The push rod 40 is configured to drive the mounting body 91 on the parking platform 80 to move, so that the mounting body 91 drives the unmanned aerial vehicle 200 to implement automatic centering. When the mounting body 91 is in the centered state, the second fitting portion 922 directly faces the power supply end 801, the contact convex point 9211 extends into the contact groove 8011, the second fitting portion 922 is electrically connected to the power supply end 801, and the unmanned aerial vehicle 200 can be charged.

A power gear 11 is arranged on a motor shaft of the driving motor 10, and the rotating frame includes a plurality of rotating rods 21 arranged in a box shape along a circumferential direction. A fitting gear 211 is arranged on at least one end part of each rotating rod 21. A fitting gear 211 on an end part of one of the rotating rods 21 meshes with the power gear 11, and a fitting gear 211 of each of the remaining rotating rods 21 meshes with an adjacent fitting gear 211, so that each rotating rod 21 is rotatable through power transmission. A movable member 30 that fits and moves relative to each rotating rod 21 is arranged on each rotating rod 21, and movable members 30 on two rotating rods 21 that are parallel to each other are connected by the push rod 40.

Specifically, a transverse direction and a longitudinal direction are defined in a horizontal plane in which the centering mechanism 100 is located. The push rod 40 may include a first rod in the transverse direction and a second rod in the longitudinal direction. The first rod is configured to adjust a position of the unmanned aerial vehicle 200 in the transverse direction, and the second rod is configured to adjust a position of the unmanned aerial vehicle 200 in the longitudinal direction, to implement automatic centering of the unmanned aerial vehicle 200.

There are four corresponding rotating rods 21. Two rotating rods 21 opposite to each other in the longitudinal direction correspond to the first rod to drive the first rod to move in the transverse direction, and two other rotating rods 21 opposite to each other in the transverse direction correspond to the second rod to drive the second rod to move in the longitudinal direction. Fitting gears 211 are arranged at both ends of at least two adjacent rotating rods 21, and a fitting gear 211 is arranged at one or each of two ends of each of the other rotating rods 21, to implement synchronous rotation of the plurality of rotating rods 21, thereby implementing synchronous position adjustment in the transverse direction and the longitudinal direction, and implementing automatic centering of the unmanned aerial vehicle 200.

Certainly, fitting forms of the rotating frame, the movable member 30, and the push rod 40 in the present disclosure are not limited thereto. In some other embodiments, the push rod 40 may include two first rods opposite in the transverse direction and two second rods opposite in the longitudinal direction. The two first rods may move toward or away from each other in the transverse direction, and the two second rods may move toward or away from each other in the longitudinal direction, so that when the two first rods and the two second rods both move toward each other, the support portion 911 may be pushed, and the support portion 911 drives the unmanned aerial vehicle 200 to correct a transverse position and a longitudinal position of the unmanned aerial vehicle 200, so that the unmanned aerial vehicle 200 moves to a center position, thereby implementing automatic centering of the unmanned aerial vehicle 200.

Further, at least four rotating rods 21 are constructed, including two transverse rotating rods opposite in the transverse direction and two longitudinal rotating rods opposite in the longitudinal direction. There is one driving motor 10. The power gear 11 of the driving motor 10 meshes with a fitting gear 211 of one of the transverse rotating rods or one of the longitudinal rotating rods to transmit power to the rotating rod 21. A fitting gear 211 is also arranged at the other end of the rotating rod 21, and the other rotating rods 21 implement sequential power transmission by using the fitting gear 211. A movable member 30 in a power connection to the rotating rod 21 is arranged on the rotating rod 21. The rotating rod 21 is driven by the driving motor 10 to rotate, and synchronously drives the movable member 30 to move. The movable member 30 is configured to drive the two first rods to move toward or away from each other, or drive the two second rods to move toward or away from each other.

For example, there may alternatively be six or eight rotating rods 21 and push rods 40, and the push rods 40 may move toward or away from each other in pairs, to implement automatic centering of the unmanned aerial vehicle 200.

It should be noted that the movable members 30 on the two transverse rotating rods are connected to the second rod, and are configured to push the second rod to move in the longitudinal direction, and the movable members 30 on the two longitudinal rotating rods are connected to the first rod, and are configured to push the first rod to move in the transverse direction. In addition, the unmanned aerial vehicle 200 is disposed at a center position of the centering mechanism 100, so that the unmanned aerial vehicle 200 can be prevented from deviation, thereby improving fixing stability.

According to the centering mechanism 100 in this embodiment of the present disclosure, the driving motor 10, the rotating frame, the movable member 30, and the push rods 40 are arranged, so that the unmanned aerial vehicle 200 can be pushed to move to the center position, automatic centering of the unmanned aerial vehicle 200 can be implemented, difficulty of centering can be reduced, and the fixing stability of the unmanned aerial vehicle 200 can be improved. In addition, power driving of the plurality of push rods 40 can be implemented by using only one driving motor 10, so that costs of the centering mechanism 100 can be effectively reduced, and control difficulty can be reduced.

Referring to FIG. 7, in some embodiments of the present disclosure, the hangar 1000 further includes a battery swapping mechanism 300. The battery swapping mechanism 300 includes a battery swapping driving component 301 and a battery swapping mechanical claw 302. The battery swapping mechanical claw 302 is configured to clamp, dismount, and mount a battery 201 of the unmanned aerial vehicle 200. The battery swapping driving component 301 is configured to drive the battery swapping mechanical claw 302 to move. After the unmanned aerial vehicle 200 is centered and limited by the centering mechanism 100, the battery swapping driving component 301 may drive the battery swapping mechanical claw 302 to replace a battery 201 in a power-shortage state on the unmanned aerial vehicle 200 with a battery 201 in a fully-charged state, to quickly replenish power of the unmanned aerial vehicle 200 and increase a mile range of the unmanned aerial vehicle 200. Optionally, the battery swapping driving component 301 is constructed as a gantry screw-rod sliding-table structure.

According to an embodiment of a third aspect of the present disclosure, a vehicle is provided, including a vehicle body and the hangar 1000 in the foregoing embodiment. The hangar 1000 is arranged at a top of the vehicle body, and the hangar 1000 may be used as a vehicle-mounted device. After an unmanned aerial vehicle 200 in the hangar 1000 takes off, the unmanned aerial vehicle 200 may collect, from a higher viewing angle, information about a road condition around the vehicle, so that a limitation on a "visual" region of the vehicle can be compensated for, a visual field of the vehicle can be effectively enlarged, environmental information that is difficult to obtain around the vehicle can be well obtained, a blind spot can be reduced, and driving safety can be improved. The unmanned aerial vehicle 200 may be further configured to assist self driving of the vehicle. In addition, after the unmanned aerial vehicle 200 returns, the unmanned aerial vehicle 200 may be electrically connected to a power supply end 801 of a parking platform 80 through an electrical connection cable 92 on an unmanned aerial vehicle rack 9, and a vehicle-mounted power supply may supply power to the power supply end 801, to implement a function of automatic charging, save a process of a manual operation, and indirectly increase endurance time of the unmanned aerial vehicle 200. In addition, the unmanned aerial vehicle 200 is also increasingly popular in daily lives of people for photographing, performances, and the like, and a combination of the unmanned aerial vehicle 200 and the vehicle can also satisfy convenience of carrying and transporting the unmanned aerial vehicle 200.

In the vehicle in this embodiment of the present disclosure, the hangar 1000 is arranged at the top of the vehicle body of the vehicle. The parking platform 80 of the hangar 1000 is configured to allow parking of an unmanned aerial vehicle 200. The unmanned aerial vehicle rack 9 may be mounted on the unmanned aerial vehicle 200. The unmanned aerial vehicle rack 9 includes the mounting body 91 and the electrical connection cable 92. When the unmanned aerial vehicle 200 is parked on the parking platform 80 by using the mounting body 91, the electrical connection cable 92 may connect the power supply end 801 of the parking platform 80 to the charging end of the unmanned aerial vehicle 200, so that the unmanned aerial vehicle 200 is automatically charged on the parking platform 80, thereby helping reduce a manual operation of charging the unmanned aerial vehicle 200 and improving user experience.

In some specific embodiments of the present disclosure, when a vehicle owner or a vehicle-mounted control system controls the unmanned aerial vehicle 200 to return to the parking platform 80, or the unmanned aerial vehicle 200 has insufficient power and automatically returns to the parking platform 80, the unmanned aerial vehicle 200 is fixed at the center of the parking platform 80 through cooperation between the centering mechanism 100 of the hangar 1000 and the unmanned aerial vehicle rack 9. In this case, the second fitting portion 922 directly faces the power supply end 801, the contact convex point 9211 extends into the contact groove 8011, the second fitting portion 922 is electrically connected to the power supply end 801, and the unmanned aerial vehicle 200 may be automatically charged. During charging, the charging controller monitors a charging current and a voltage of the battery 201 of the unmanned aerial vehicle 200, and the current drops to within 0.1 A after the unmanned aerial vehicle 200 is fully charged. In this case, the unmanned aerial vehicle 200 is fully charged, and the charging controller stops output of the power supply charging the unmanned aerial vehicle 200. Therefore, damage to the battery 201 caused by overcharging is prevented.

It needs to be understood that, in the descriptions of the present disclosure, a direction or positional relationship indicated by terms such as "thickness", "up", "down", "front", "back", "top", "bottom", "in", and "out" is a direction or positional relationship based on illustrations in the drawings, and is merely intended for ease or brevity of description of the present disclosure, but does not necessarily mean or imply that the indicated device or component is provided in the specified direction or constructed or operated in the specified direction. Therefore, such terms are not to be understood as a limitation on the present disclosure.

In addition, the terms "first" and "second" are merely intended for a purpose of description, and shall not be understood as indicating or implying relative significance or implicitly indicating a quantity of indicated technical features. Therefore, features defining "first" and "second" can explicitly or implicitly include one or more of the features. In the descriptions of the present disclosure, unless clearly and specifically defined otherwise, "a plurality of" means two or more than two.

In the present disclosure, unless otherwise clearly specified and defined, terms such as "mounting", "interconnection", "connection", and "fixing" shall be understood in a broad sense, for example, may be a fixing connection, a detachable connection, an integral connection, a mechanical connection, an electrical connection, communication, a direct connection, an indirect connection by using an intermediate medium, communication between interiors of two components, or interaction between two components. A person of ordinary skill in the art may understand specific meanings of the terms in the present disclosure according to specific situations.

In the present disclosure, unless otherwise clearly specified and defined, that a first feature is "above" or "below" a second feature may be that the first feature directly contacts with the second feature, or the first feature indirectly contacts with the second feature through an intermediate medium. In addition, that a first feature is "over", "above", and "upward" a second feature may mean that the first feature is directly above or obliquely above the second feature, or merely indicate that a horizontal height of the first feature is higher than that of the second feature. That a first feature is "under", "below", and "beneath" the second feature may be that the first feature is directly below or obliquely below the second feature, or may merely indicate that a horizontal height of the first feature is lower than that of the second feature.

In the description of this specification, the description of the reference terms such as "an embodiment", "some embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily refer to a same embodiment or example. Furthermore, the specific feature, structure, material, or characteristic described may be combined in an appropriate manner in any one or more embodiments or examples. In addition, in a case of no contradiction, a person skilled in the art may integrate and combine the different embodiments or examples with the features of the different embodiments or examples described in this specification.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An unmanned aerial vehicle rack, an unmanned aerial vehicle (200) comprising a charging end, the unmanned aerial vehicle rack comprising:
a mounting body (91), the mounting body (91) being configured to mount the unmanned aerial vehicle (200), and the mounting body (91) being configured to be parked on a parking platform (80); and
an electrical connection cable (92), a first fitting portion (921) being arranged at a first end of the electrical connection cable (92), the first fitting portion (921) being configured to electrically connect to the charging end, a second end of the electrical connection cable (92) being connected to a second fitting portion (922) at a bottom of the mounting body (91), and the second fitting portion (922) being configured to electrically connect to a power supply end (801) of the parking platform (80).

2. The unmanned aerial vehicle rack according to claim 1, wherein a cabling channel is provided on the mounting body (91), the cabling channel extends to the bottom of the mounting body (91), and the electrical connection cable (92) is mounted in the cabling channel.

3. The unmanned aerial vehicle rack according to claim 1 or 2, wherein the second fitting portion (922) comprises a contact convex point (9211), a contact groove (8011) is provided at the power supply end (801), and the contact convex point (9211) is configured to extend into the contact groove (8011) to electrically connect the second fitting portion (922) to the power supply end (801).

4. The unmanned aerial vehicle rack according to claim 3, wherein a mounting channel is provided on the second fitting portion (922), an elastic member is arranged in the mounting channel, the elastic member fits the contact convex point (9211) to apply a force toward the contact convex point (9211), and the force causes the contact convex point (9211) to exhibit a tendency to extend out of the mounting channel.

5. The unmanned aerial vehicle rack according to claim 3, wherein a plurality of contact convex points (9211) are provided, a plurality of avoidance through holes are provided on the mounting body (91), the plurality of contact convex points (9211) are in one-to-one correspondence with the plurality of avoidance through holes, and each of the plurality of contact convex points (9211) is configured to extend out of the corresponding avoidance through hole to contact with the power supply end (801).

6. The unmanned aerial vehicle rack according to any one of claims 1 to 5, wherein the mounting body (91) comprises:
a support portion (911), the support portion (911) being configured to be supported by the parking platform (80); and
a mounting portion (912), the mounting portion (912) being arranged at a top of the support portion (911), a placement space being defined by the mounting portion (912) and the support portion (911), and a front portion and a rear portion of the placement space being open for mounting the unmanned aerial vehicle (200).

7. The unmanned aerial vehicle rack according to claim 6, wherein the top of the support portion (911) is formed as a support surface that fits the unmanned aerial vehicle, and a first hollowed portion (9111) is provided on the support surface.

8. The unmanned aerial vehicle rack according to claim 6 or 7, wherein a second hollowed portion (9122) is provided on the mounting portion (912).

9. The unmanned aerial vehicle rack according to any of claims 6 to 8, wherein a mounting assembly (94) configured to mount an external device (400) is arranged on a top of the mounting portion (912).

10. The unmanned aerial vehicle rack according to claim 9, wherein the mounting assembly (94) comprises:
a threaded hole (941), the threaded hole (941) being provided at the top of the mounting portion (912);
a connection adapter (942), the connection adapter (942) fitting a screw thread of the threaded hole (941), and a fixing hole being provided at an end part of the connection adapter (942) projecting out of the mounting portion (912); and
a fastener (943), the fastener (943) being configured to fit the external device (400) and the fixing hole.

11. A hangar, comprising:
a parking platform (80), a power supply end (801) being arranged on the parking platform (80); and
an unmanned aerial vehicle rack, the unmanned aerial vehicle rack being the unmanned aerial vehicle rack according to any one of claims 1 to 10, and when a mounting body (91) is parked on the parking platform (80), a second fitting portion (922) being configured to electrically connect to the power supply end (801).

12. The hangar according to claim 11, further comprising a charging controller electrically connected to the power supply end (801), the charging controller being configured to control an electrical output of the power supply end (801).

13. The hangar according to claim 11 or 12, further comprising a current detection loop, the current detection loop comprising two contacts arranged spaced apart at the power supply end (801), and when the second fitting portion (922) makes contact with the two contacts, the current detection loop being closed to determine that the unmanned aerial vehicle rack is parked on the parking platform (80).

14. The hangar according to any one of claims 11 to 13, further comprising a centering mechanism (100), the centering mechanism (100) being configured to adjust a position of the mounting body (91) on the parking platform (80), to cause the mounting body (91) to be in a centered state in which the second fitting portion (922) is electrically connected to the power supply end (801).

15. A vehicle, comprising:
a vehicle body; and
a hangar, the hangar being the hangar according to any one of claims 11 to 14, and the hangar being arranged at a top of the vehicle body.
